# FASCICULE DE BREVET EUROPEEN

(11) **EP 1 323 140 B1**
(45) Date de publication et mention de la délivrance du brevet: **06.09.2006**
(21) Numéro de dépôt: 01965318.7
(22) Date de dépôt: 09.08.2001
(51) Int. Cl.: G07F 7/10, G07F 19/00

(54) **PROCEDE POUR FOURNIR DES DONNEES D'IDENTIFICATION D'UNE CARTE DE PAIEMENT A UN USAGER**
VERFAHREN ZUM LIEFERN VON IDENTIFIKATIONSDATEN EINER BEZAHLKARTE AN EINEN ANWENDER
METHOD FOR PROVIDING IDENTIFICATION DATA OF A BANKING CARD TO A USER

(30) Priorité: 28.08.2000 FR 0011004
(43) Date de publication de la demande: 02.07.2003
(73) Titulaire: Axalto S.A., 92120 Montrouge (FR)
(72) Inventeur: GUION, Christian, F-91370 Verriere Le Buisson (FR)
(74) Mandataire: Cassagne, Philippe M.J.
(86) Numéro de dépôt international: PCT/FR2001/002582
(87) Numéro de publication internationale: WO 2002/019284

(56) Documents cités:
- WO-A-00/33497
- WO-A-00/49586
- WO-A-99/49424
- US-A- 5 883 810
- US-A- 5 956 699
- US-A- 6 000 832

## Description

La présente invention concerne un procédé pour fournir des données d'identification d'une carte de paiement à un usager.

La présente invention concerne tout particulièrement la fourniture des numéros de cartes temporaires encore appelées cartes de paiement à usage limité allouées par les banques à leurs clients pour sécuriser leurs transactions sur Internet.

Le terme "carte de paiement" est utilisé pour désigner toute carte bancaire à débit différé ou immédiat, toute carte de crédit, etc., émise par une banque ou un établissement spécialisé.

La sécurité des transactions effectuées au moyen de cartes de paiement repose aujourd'hui sur deux éléments : le contrôle de l'authenticité de la signature apposée par l'acheteur sur la facture, signature manuscrite ou électronique, et le contrôle de l'authenticité et de la validité de la carte en interrogeant l'établissement émetteur de la carte afin d'obtenir l'autorisation d'accepter cette carte.

Ce double contrôle est classiquement opéré par le fournisseur lorsqu'il peut disposer physiquement de la carte de paiement. La vérification de la signature manuscrite ou électronique est en effet aisée, de même pour ce qui est de la demande d'autorisation préalable. Il existe d'ailleurs des terminaux de paiement lecteurs de cartes adaptés à effectuer automatiquement de tels contrôles.

L'acheteur saisit sur le clavier d'un tel terminal, le code secret de sa carte, encore appelé PIN code (PIN étant l'acronyme anglais de Personnal Identification Number). Les circuits électroniques comparent alors le code secret saisi par l'acheteur au code inscrit de manière crypté sur la carte et ils valident la transaction en cours lorsqu'il y a coïncidence entre les deux. Par ailleurs, à partir des informations lues sur la carte, le terminal est capable d'interroger par l'intermédiaire d'un réseau de télécommunication, un serveur de gestion des cartes de paiement qui lui confirme si la carte est bien valide et n'est pas frappée d'interdiction. Cette vérification quant à la validité de la carte pouvant se faire "on line" en appelant le serveur lors de la transaction, ou bien encore "off line" grâce au téléchargement régulier des listes de cartes interdites (listes noires ou black lists) et/ou des listes de cartes authentiques (listes positives ou white lists). Il est à noter que l'utilisation de cartes à circuits électroniques permet de contrôler directement l'authenticité de la carte.

La consultation des serveurs de gestion pour connaître le statut d'une carte de paiement et l'utilisation d'un code secret connu du seul possesseur de la carte réduisent considérablement les possibilités de fraudes.

Il n'en va toutefois plus de même, lorsque l'acheteur et le vendeur sont loin l'un de l'autre et qu'il n'est alors plus possible d'utiliser un terminal de paiement lecteur de cartes pour tester la carte.

En effet, pour réaliser une transaction lorsque l'acheteur et le vendeur sont loin l'un de l'autre, par exemple lors d'un achat par correspondance, ou lors d'une réservation par téléphone ou encore lors d'une transaction électronique sur l'Internet, le vendeur se limite à demander le numéro et la date d'expiration de la carte de paiement de l'acheteur. La communication de ces seules informations suffit à valider une facture que le fournisseur présente ensuite pour encaissement à sa banque.

La simplicité du mécanisme actuel d'acquittement par carte de paiement des transactions opérées à distance est à l'origine d'un grand nombre de fraudes, puisque toute personne ayant la connaissance d'un numéro de carte de paiement et de la date d'expiration de cette dernière peut utiliser ces informations de façon illégales pour acheter des biens ou des services et ce, tant que le véritable possesseur de la carte ne se rend pas compte des détournements dont il est victime et ne fait pas opposition auprès de l'établissement émetteur de la carte. Par ailleurs, ce système autorise des reniements abusifs de la part d'acheteurs indélicats qui refusent de voir débiter leur compte au prétexte mensonger que les transactions ont été effectuées à leur insu. Cela est particulièrement vrai pour les transactions électroniques réalisées sur l'Internet puisque, sur un tel réseau de communication ouvert, il est particulièrement facile d'intercepter les informations qui y sont échangées. Cette insécurité est aujourd'hui un frein important au commerce sur l'Internet.

De nombreuses tentatives ont été lancées pour pallier cet inconvénient et rendre les transactions à distance plus sûres et notamment les transactions électroniques.

Parmi ces tentatives on peut citer les systèmes du type SET qui consistent à crypter les informations échangées sur Internet. Avec de tels systèmes les numéros de cartes bancaires ne sont donc plus communiqués ouvertement et ne sont donc plus interceptables. La mise en oeuvre de tels systèmes butte toutefois sur la mise à disposition du plus grand nombre, des moyens spécifiquement prévus pour sécuriser les transactions comme des lecteurs de cartes pour ordinateurs, des moyens de chiffrage dans les ordinateurs ou dans les lecteurs, et la standardisation des protocoles choisis par les différents opérateurs. Par ailleurs, si les numéros ne sont plus directement interceptables lors de la communication entre l'acheteur et le site Web, ils peuvent toujours l'être sur le site Web où les numéros de carte se retrouvent stockés sous une forme décryptée et ils peuvent l'être sur l'ordinateur de le titulaire à partir de programmes espions résidents adaptés à enregistrer les informations saisies par le titulaire sur les touches de son ordinateur.

Une autre approche, consiste à utiliser une carte de paiement temporaire ou à usage limité. Une telle carte est généralement créée par l'établissement financier de l'acheteur, à la demande de ce dernier. Cette carte dont la durée de vie est généralement limitée à une transaction ou encore à une somme donnée d'argent, se présente essentiellement sous la forme d'un numéro et d'une date d'expiration ayant les mêmes formats ISO que la carte de paiement principale de l'acheteur (de type Visa, Mastercard, etc.).

Cette solution nécessite donc la transmission de manière sécurisée des numéros des cartes temporaires aux acheteurs. La solution généralement choisie par les banques consiste à utiliser des liaisons cryptées de type SSL entre les ordinateurs des acheteurs et les serveurs bancaires. Cette méthode n'est toutefois pas sans risque de fraude puisque les méthodes développées par les fraudeurs sur Internet deviennent de plus en plus performantes.

Dans le document US-A-6 000 832 des données d'identification de la carte sont générées par des moyens appropriés de l'usager.

L'objet de la présente invention est donc de proposer une alternative pour transmettre de façon confidentielle aux usagers les données d'identification des cartes temporaires, tels que les numéros et les dates d'expiration, alternative qui soit toute à la fois sûre et simple à mettre en oeuvre.

Le procédé selon l'invention a donc pour objet de fournir de façon sécurisée des données d'identification d'une carte de paiement à un usager.

Selon l'invention, le procédé est caractérisé en ce que lesdites données d'identification de la carte de paiement sont créées directement par ledit usager à partir de moyens de création appropriés, les données de la carte ainsi créées étant ensuite communiquées par des moyens de télécommunication à un serveur informatique d'un établissement financier gestionnaire de la carte de paiement.

Selon une autre caractéristique du procédé objet de la présente invention, les données d'identification de la carte consistent dans le numéro et la date d'expiration de ladite carte de paiement.

Selon une autre caractéristique du procédé objet de la présente invention, les données d'identification de la carte de paiement sont directement créées au moyen d'un téléphone spécialement adapté à cet effet.

Selon une autre caractéristique du procédé objet de la présente invention, les données d'identification de la carte de paiement sont élaborées par un logiciel approprié équipant la carte à microprocesseur SIM équipant un radio téléphone cellulaire de type GSM.

Selon une autre caractéristique du procédé objet de la présente invention, le téléphone communique automatiquement lesdites données d'identification de la carte au serveur gestionnaire.

Selon une autre caractéristique du procédé objet de la présente invention, les données de la carte sont communiquées au serveur gestionnaire par le réseau de radiotéléphonie cellulaire sous forme d'un message SMS.

Selon une autre caractéristique du procédé objet de la présente invention, les données d'identification de la carte de paiement sont directement créées au moyen d'un micro-ordinateur personnel.

Selon une autre caractéristique du procédé objet de la présente invention, le micro-ordinateur communique automatiquement les données d'identification de la carte au serveur gestionnaire en utilisant le réseau Internet.

Selon une autre caractéristique du procédé objet de la présente invention, la carte de paiement n'est valide que pour un nombre limité de transactions et que pour une durée limitée.

Selon une autre caractéristique du procédé objet de la présente invention, la carte de paiement n'est valide que pour une seule transaction.

On comprendra mieux les buts, aspects et avantages de la présente invention, d'après la description donnée ci-après de plusieurs modes de réalisation de l'invention, présentés à titre d'exemples non limitatifs, en se référant au dessin annexé, dans lequel :

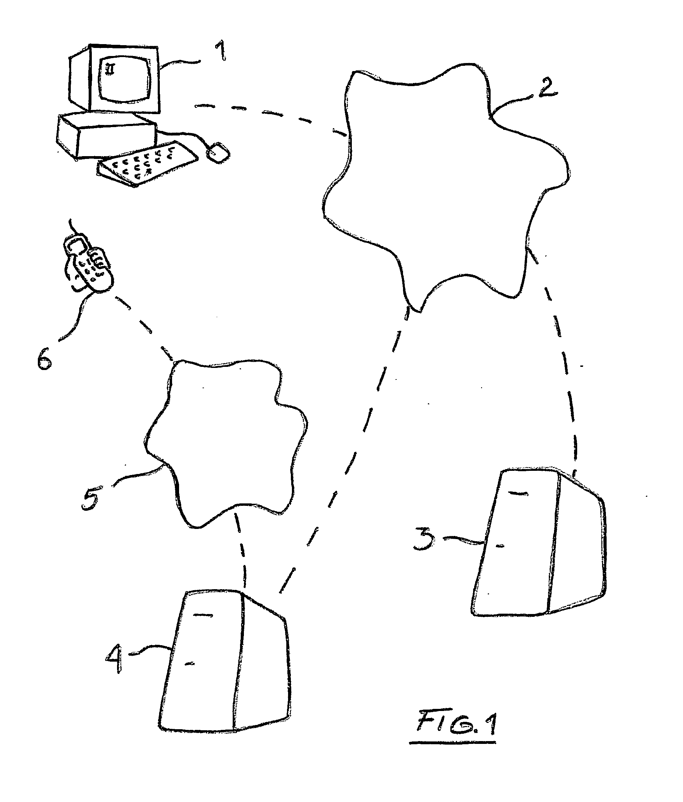

la figure 1 est une vue schématique du système nécessaire à la mise en oeuvre du procédé selon la présente invention.

En se reportant à la figure 1, seuls les éléments utiles à la compréhension de l'invention, ont été figurés.

L'exemple qui a été choisi pour illustrer le procédé et son dispositif de mise en oeuvre selon l'invention, concernent l'utilisation d'une carte de paiement temporaire pour opérer une transaction électronique sur le réseau Internet. Bien évidemment, l'invention n'est pas limitée à ce seul exemple et concerne plus généralement la communication sécurisée des données d'identification d'une carte de paiement, tels que son numéro, sa date de validité ou encore un PIN code, cette communication s'opérant entre deux sites distants et notamment entre le domicile d'un usager et son établissement financier.

Selon la représentation de la figure 1, le système nécessaire à la mise en oeuvre de l'invention est le suivant. Un acheteur est installé devant un ordinateur qui est par exemple son micro-ordinateur personnel référencé 1, lequel est équipé d'un modem permettant sa connexion au réseau Internet 2. L'ordinateur 1 est connectable via le réseau Internet 2 au serveur 7 d'un site marchand proposant un service de vente de bien ou de service comme par exemple un service de vente de livres.

L'ordinateur 1 est également connectable via le réseau Internet 2 au serveur de gestion 4 de son établissement financier. La liaison entre le serveur de gestion 4 et le micro-ordinateur de l'acheteur est de préférence sécurisée, en étant par exemple de type SSL.

L'acheteur dispose par ailleurs d'un téléphone mobile 6 muni d'une carte SIM (Subscriber Identity Module). Ce téléphone 6 est apte à recevoir ou à émettre à travers un réseau 5 de radio télécommunication de type GSM ou autre, des données en provenance ou à destination du serveur 4 sous la forme de messages radioélectriques émis selon un protocole dit de service de message court, aussi connu sous le nom de SMS (Short Message Service). Ce protocole autorise des messages d'une longueur de 160 caractères. On peut chaîner jusqu'à quinze messages consécutifs, soit 2400 caractères dans un message. De plus ce protocole est présent sur tous les téléphones mobiles du marché. Il est en général utilisé par les opérateurs par exemple pour prévenir leurs abonnés qu'ils ont reçu de nouveaux messages dans leurs boîtes vocales.

L'acheteur s'étant connecté au site marchand 3 à travers le réseau Internet 2 au site marchand 3 et ayant choisi d'acheter un livre il reçoit du site 3 un formulaire d'enregistrement de sa commande où doivent être saisies un certain nombre d'informations, tels que le numéro et la date d'expiration d'une carte de paiement. Dans la mesure où l'acheteur ne souhaite pas communiquer ouvertement les informations relatives à sa propre carte de paiement, celui-ci va utiliser en lieu et place une carte temporaire qu'il va lui-même créer.

Ces cartes de paiement temporaires sont parfaitement similaires quant aux prestations offertes à la carte permanente de l'acheteur.

Elles sont associées au même compte bancaire et peuvent être acceptées par les mêmes commerçants que la carte permanente (réseaux Visa, Mastercard, etc.). Leurs principales différences résident dans le fait qu'elles ne sont valables que pour un nombre limité de transactions et de préférence que pour une seule transaction. De préférence, ces cartes ont de plus une durée de vie relativement brève de quelques dizaines de secondes à quelques jours.

Bien que pouvant être utilisées pour toute transaction commerciale, ces cartes temporaires de paiement sont particulièrement adaptées pour les transactions à distance. Les cartes temporaires de paiement peuvent en particulier ne pas avoir de support physique (affichage temporaire sur un écran ou encore communication verbale).

Hormis ces différences, les cartes temporaires de paiement sont parfaitement similaires aux autres cartes notamment quant au format et au codage de leurs numéros ou à leur date d'expiration (format à quatre chiffres : mois/année (07/01)). Ainsi, dans la mesure où les cartes de paiement traditionnelles comportent des numéros à seize chiffres, selon la norme ISO actuellement en vigueur, alors chaque numéro de carte temporaire comporte aussi seize chiffres : les six premiers chiffres formant le code BIN de l'organisme financier émetteur et le dernier chiffre le code d'authentification de Luhn (CHECKSUM). Bien évidemment le format à seize chiffres n'est pas limitatif de l'invention, les numéros des cartes temporaires pouvant prendre n'importe quelle autre forme : série de dix-neuf chiffres, série alphanumérique de longueur donnée, etc.

Il est par ailleurs possible de fournir à chaque carte temporaire, un code secret encore appelé PIN code (Personal Identification Number). La carte temporaire peut comporter également de façon plus précise sa date et son heure de fin de validité (par exemple au format jour/mois/année heure (27/07/01 14:31)), cette information est destinée au seul titulaire de la carte.

C'est donc l'acheteur lui-même qui génère sa carte temporaire à partir d'un algorithme approprié installé sur son ordinateur ou encore sur la carte électronique SIM de son téléphone mobile 6.

Considérons tout d'abord l'usage du téléphone 6 pour créer une carte temporaire. L'acheteur souhaitant réaliser un achat, prend son téléphone 6 et lance le programme adapté de création de carte temporaire. La mise en oeuvre de ce programme nécessite la saisie sur le clavier du téléphone 6, des caractéristiques de la carte temporaire et en particulier, le montant autorisé et la durée de validité.

Le programme lui communique en retour toutes les données caractéristiques de la carte qu'il a créée, lesquelles s'affichent alors sur l'écran de son téléphone 6 ou bien encore sont simplement énoncées verbalement dans l'écouteur de l'appareil. Ces données d'identification sont le numéro à seize chiffres, une date d'expiration et éventuellement un code secret associé.

La carte temporaire ayant été créée dans un premier temps, le programme précité transfère dans un second temps, toutes les caractéristiques de la carte au serveur 4 de l'établissement financier où réside le compte bancaire auquel est rattachée la carte temporaire et qui sera le gestionnaire de cette carte temporaire. Ce transfert s'opère automatiquement via le réseau téléphonique auquel est connecté le téléphone 6 de l'utilisateur sous la forme d'un message SMS (Short Message Service).

Le serveur 4 adapté pour recevoir un tel message SMS, gère alors cette nouvelle carte temporaire de la même façon que s'il l'avait lui-même créée.

De façon similaire, la présente invention peut être mise en oeuvre par le micro-ordinateur 1 de l'acheteur en y logeant le programme de création de carte approprié. Les caractéristiques de la carte temporaire ainsi créée et notamment ses données d'identification temporaire sont ensuite transférées automatiquement via le réseau Internet 2 et la liaison SSL vers le serveur 4. En variante, ces données peuvent être transférées directement par l'acheteur au serveur 4 en utilisant son téléphone 6, par exemple en envoyant un SMS.

L'acheteur, disposant directement des informations d'identification de sa carte temporaire ainsi créée par son téléphone 6 ou son ordinateur 1, est alors à-même de s'en servir.

L'acheteur n'a donc plus alors qu'à rentrer le numéro et la date d'expiration dans le formulaire de commande du site marchand 3.

Etant donné, que le numéro et la date d'expiration saisis par l'acheteur sont parfaitement similaires à ceux d'une carte de paiement traditionnelle, le marchand n'a pas à modifier ses procédures transactionnelles pour accepter la commande du titulaire payée au moyen de la carte temporaire. Le marchand n'a d'ailleurs aucune possibilité de différencier les numéros et donc la nature des cartes de paiement qui lui sont communiquées.

Le marchand procède donc à une demande d'autorisation de façon tout à fait classique. Ayant obtenue en retour l'autorisation demandée, la transaction est validée et le livre commandé peut être livré à l'acheteur. Le marchand n'a plus alors qu'à remettre la facture correspondante à son établissement financier pour que ce dernier puisse obtenir de l'établissement émetteur le transfert des fonds.

Bien évidement l'invention n'est pas limitée aux modes de réalisation décrits précédemment.

Ainsi le téléphone 6 peut ne pas être un radio téléphone portable de type GSM ou autre mais un téléphone connecté au réseau téléphonique public commuté PSTN (Public Switching Telephone Network) et disposant des capacités de calcul appropriées.

Ainsi les données d'identification des cartes de paiement transmises au serveur 4 par voie téléphonique peuvent l'être de différentes manières et pas seulement par SMS. Ainsi elles peuvent l'être vocalement (énonciation verbale sur la ligne), en claire ou de façon codée en utilisant une clé de cryptage de type Jules César, où à chaque chiffre de zéro à neuf est associé une lettre, la clé de cryptage ayant été donné préalablement et de façon sécurisée par l'établissement financier à l'utilisateur.

Ainsi, lors de l'accès au serveur 4 par le téléphone 6 (que se soit via le réseau commuté PSTN (Public Switching Telephone Network) ou par un réseau de radio téléphone de type GSM par exemple) pour transmettre les données d'identifications de la carte temporaire créée et les conditions d'utilisation de cette dernière, l'identification de l'usager peut se faire de différentes manières : par un système de reconnaissance vocale, par l'utilisation de code secret tapé sur le clavier du téléphone ou énoncer verbalement sur la ligne, envoi d'un message prédéfini, etc.

## Revendications

1. Procédé pour fournir de façon sécurisée des données d'identification d'une carte de paiement à un usager, **caractérisé en ce que** lesdites données d'identification de la carte de paiement sont créées directement par ledit usager à partir de moyens de création appropriés (6,1), les données de la carte ainsi créées étant ensuite communiquées par l'usager par des moyens de télécommunication (6,5 ;1,2) à un serveur informatique (4) d'un établissement financier gestionnaire de ladite carte.

2. Procédé selon la revendication 1, **caractérisé en ce que** lesdites données d'identification consistent dans le numéro et la date d'expiration de ladite carte de paiement.

3. Procédé selon l'une quelconque des revendications 1 à 2, **caractérisé en ce que** lesdites données d'identification de ladite carte de paiement sont directement créées au moyen d'un téléphone (6) spécialement adapté à cet effet.

4. Procédé selon la revendication 3, **caractérisé en ce que** lesdites données sont élaborées par un logiciel approprié équipant la carte à microprocesseur SIM équipant un radio téléphone cellulaire de type GSM (6).

5. Procédé selon l'une quelconque des revendications 3 à 4, **caractérisé en ce que** ledit téléphone (6) communique automatiquement lesdites données d'identification audit serveur (4).

6. Procédé selon les revendications 4 et 5, **caractérisé en ce que** lesdites données sont communiquées au serveur (4) par ledit réseau de téléphonie cellulaire (5) sous forme d'un message SMS.

7. Procédé selon l'une quelconque des revendications 1 à 2, **caractérisé en ce que** lesdites données d'identification de ladite carte de paiement sont directement créées au moyen d'un micro-ordinateur personnel (1).

8. Procédé selon l'une quelconque des revendications précédentes, **caractérisé en ce que** ledit micro-ordinateur (1) communique automatiquement lesdites données d'identification audit serveur (4) en utilisant le réseau Internet (2).

9. Procédé selon l'une quelconque des revendications précédentes, **caractérisé en ce que** ladite carte de paiement n'est valide que pour un nombre limité de transactions et que pour une durée limitée.

10. Procédé selon l'une quelconque des revendications précédentes, **caractérisé en ce que** ladite carte de paiement n'est valide que pour une seule transaction.

## Claims

1. Process for the secure delivery of identification data for a payment card to a user, with the feature that this payment card identification data is created directly by this user using appropriate means of creation (6, 1), the card data as created then being communicated by the user by telecommunication means (6, 5; 1, 2) to a computer server (4) at the financial institution responsible for the management of this card.

2. Process as defined in claim 1, with the feature that this identification data consists of the number and the expiry date of the payment card.

3. Process as defined in any claims 1 to 2, with the feature that this identification data of the payment card is created directly by means of a telephone (6) that has been specifically adapted for this purpose.

4. Process as defined in claim 3, with the feature that this data is compiled by a suitable software application contained on the SIM microprocessor card fitted to a GSM cellular radio telephone (6).

5. Process as defined in any claims 3 to 4, with the feature that this telephone (6) automatically communicates this identification data to the server (4).

6. Process as defined in claims 4 and 5, with the feature that this data is communicated to the server (4) by the stated cellular telephone network (5) in the form of an SMS message.

7. Process as defined in any claim 1 to 2, with the feature that this identification data for the payment card is directly created by means of a personal microcomputer (1).

8. Process as defined in any of the above claims, with the feature that this microcomputer (1) automatically communicates this identification data to the server (4) by means of the Internet network (2).

9. Process as defined in any of the preceding claims, with the feature that this payment card is only valid for a limited number of transactions and only for a limited period of time.

10. Process as defined in any of the preceding claims, with the feature that this payment card is only valid for a single transaction.

## Patentansprüche

1. Verfahren zur gesicherten Bereitstellung von Identifikationsdaten einer Zahlkarte für einen Benutzer, **dadurch gekennzeichnet, dass** diese Identifikationsdaten der Zahlkarte von diesem Benutzer direkt durch geeignete Mittel zu ihrer Erstellung erstellt werden (6, 1). Die auf diese Weise erstellten Daten der Karte werden dann vom Benutzer über Telekommunikationsmittel (6,5; 1,2) an einen Datenverarbeitungsserver (4) eines Finanzinstituts, das diese Karte verwaltet, übermittelt.

2. Verfahren nach Anspruch 1, **dadurch gekennzeichnet, dass** die Identifikationsdaten aus der Nummer und dem Ablaufdatum dieser Zahlkarte bestehen.

3. Verfahren nach einem der Ansprüche 1 oder 2, **dadurch gekennzeichnet, dass** die Identifikationsdaten der genannten Zahlkarte direkt mit einem speziell für diesen Zweck angepassten Telefon (6) erstellt werden.

4. Verfahren nach Anspruch 3, **dadurch gekennzeichnet, dass** die Daten von einer geeigneten Software angelegt werden, mit der die SIM-Chipkarte eines Mobilfunktelefons des Typs GSM (6) ausgestattet ist.

5. Verfahren nach einem der Ansprüche 3 oder 4, **dadurch gekennzeichnet, dass** das Telefon (6) die Identifikationsdaten automatisch an den Server (4) übermittelt.

6. Verfahren nach den Ansprüchen 4 und 5, **dadurch gekennzeichnet, dass** die Daten von dem Mobilfunknetz (5) in Form einer SMS-Mitteilung an den Server (4) übermittelt werden.

7. Verfahren nach einem der Ansprüche 1 oder 2, **dadurch gekennzeichnet, dass** die Identifikationsdaten der Zahlkarte direkt mit Hilfe eines Personalcomputers (1) erstellt werden.

8. Verfahren nach einem der vorstehenden Ansprüche, **dadurch gekennzeichnet, dass** der Personalcomputer (1) die Identifikationsdaten unter Benutzung des Internet-Netzwerks (2) automatisch an den Server (4) übermittelt.

9. Verfahren nach einem der vorstehenden Ansprüche, **dadurch gekennzeichnet, dass** die Zahlkarte nur für eine begrenzte Zahl von Transaktionen und nur für eine begrenzte Dauer gültig ist.

10. Verfahren nach einem der vorstehenden Ansprüche, **dadurch gekennzeichnet, dass** die Zahlkarte nur für eine einzige Transaktion gültig ist.
